# EUROPÄISCHE PATENTSCHRIFT

(11) **EP 1 836 764 B1**
(45) Veröffentlichungstag und Bekanntmachung des Hinweises auf die Patenterteilung: **13.04.2011**
(21) Anmeldenummer: 05850155.2
(22) Anmeldetag: 15.12.2005
(51) Int. Cl.: H02P 3/24

(54) **STROMVERSORGUNGSVORRICHTUNG FÜR EINEN ELEKTROMOTOR, VERFAHREN ZUM BETREIBEN EINES ELEKTROMOTORS**
POWER SUPPLY DEVICE FOR AN ELECTRIC MOTOR METHOD FOR OPERATION OF AN ELECTRIC MOTOR
DISPOSITIF D'ALIMENTATION EN COURANT POUR UN MOTEUR ELECTRIQUE ET PROCEDE POUR FAIRE FONCTIONNER UN MOTEUR ELECTRIQUE

(30) Priorität: 13.01.2005 DE 102005001575
(43) Veröffentlichungstag der Anmeldung: 26.09.2007
(73) Patentinhaber: Schaeffler Technologies GmbH & Co. KG, 91074 Herzogenaurach (DE)
(72) Erfinder: ACKER, Christian, F-67840 Kilstett (FR)
(86) Internationale Anmeldenummer: PCT/DE2005/002260
(87) Internationale Veröffentlichungsnummer: WO 2006/074627

(56) Entgegenhaltungen:
- EP-A- 0 791 875
- DD-A5- 282 552
- DE-A1- 3 312 956
- DE-A1- 10 257 706
- US-A- 3 903 464
- US-A- 4 417 191
- US-A- 5 457 372
- PATENT ABSTRACTS OF JAPAN Bd. 006, Nr. 211 (E-137), 23. Oktober 1982 (1982-10-23) & JP 57 113782 A (KOGYO GIJUTSUIN; others: 0J), 15. Juli 1982 (1982-07-15)

## Beschreibung

Die Erfindung betrifft eine Stromversorgungsvorrichtung für einen in einem Normallaufbetrieb und/oder in einem Notlaufbetrieb betreibbaren Elektromotor, insbesondere für einen Stellantrieb in einem Kraftfahrzeug, sowie ein Verfahren zum Betreiben eines Elektromotors in einem Normallaufbetrieb und/oder Notlaufbetrieb, insbesondere für einen Stellantrieb in einemraftfahrzeug.

Die DE 10257706 beschreibt einen von einem Elektromotor angetriebenen Nockenwellenversteller.

Es ist bekannt, verstellbare Bauteile in einem Kraftfahrzeug mittels eines Stellantriebs in ihrer Lage zu verstellen, um dadurch Systeme im Kraftfahrzeug zu steuern bzw. Systemzustände, insbesondere gezielt, zu beeinflussen und/oder herbeizuführen, wie beispielsweise bei einer Nockenwelle bzw. einem Nockenwellenversteller für einen Kraftfahrzeug-Verbrennungsmotor oder ein Ventil bzw. einer Ventilverstellung für eine Kraftstoffeinspritzung. Derartige Kraftfahrzeug-Stellantriebe bewirken, wie weiter bekannt ist, die Verstellung der Bauteile mittels Elektromotoren (Stellmotoren), beispielsweise mittels bekannter Drehstrommotoren, wie Drehstrom-Synchron- oder -Asynchronmotoren.

Ein Drehstrom-Asynchronmotor, kurz im folgenden Asynchronmotor, ist ein Elektromotor, der mit Drehstrom betrieben wird. Elektrisch gesehen ist ein Asynchronmotor ein kurzgeschlossener Drehstrom-Transformator, dessen Sekundärwicklung (ein Rotor) drehbar gelagert ist. Durch eine an eine Statorwicklung angelegte Betriebsspannung wird im Inneren der Maschine ein magnetisches Drehfeld erzeugt, welches in der kurzgeschlossenen inneren Wicklung (Anker) einen Strom induziert. Dieser Strom baut selbst wiederum ein Magnetfeld um den Rotor auf. Beide Magnetfelder wechselwirken so, dass letztlich ein Drehmoment erzeugt wird.

Ein Drehstrom-Synchronmotor, kurz im folgenden Synchronmotor, ist ein Elektromotor, der ebenfalls mit Drehstrom betrieben wird. Er besitzt außen eine Wicklung, die ein magnetisches Drehfeld erzeugt. Der Rotor trägt entweder Permanentmagneten oder eine Erregerwicklung zur Felderzeugung. Der Rotor mit der Erregung eilt bei dem Synchronmotor dem Drehfeld nach. Die Synchronmaschine hat im Unterschied zum Drehstrom-Asynchronmotor keinen Schlupf, da keine Spannungen in den Rotor induziert werden müssen. Daher kann man sich bei Betrieb am starren Netz auf ihre konstante Drehzahl verlassen.

Bei modernen Stellantrieben werden die Elektromotoren meist unter Verwendung elektronischer Steuervorrichtungen elektronisch angesteuert, wobei Betriebszustände (Systemzustände) des mittels des zu steuernden Elektromotors und/oder des zu verstellenden Stellantriebs gesteuerten Systems überwacht werden. Bewegen sich die überwachten Betriebszuständen innerhalb bestimmter, vorgebbarer Grenzen, arbeitet das überwachte System in einem meist als Normalzustand bezeichneten Zustand.

Werden allerdings sich außerhalb der Grenzen der normalen Betriebszuständen befindliche Betriebszustände, beispielsweise als Systemfehler bezeichenbar, festgestellt - kurz werden Systemfehler festgestellt - , so sieht die Steuervorrichtung in der Regel eine Steuerung für einen Not- bzw. Notlaufbetrieb vor, um Schädigungen des gesteuerten Systems zu vermeiden.

Ein solcher Notbetrieb kann beispielsweise ein Verstellen des durch den Stellantrieb verstellbaren Bauteils in eine Sicherheitsposition, auch als Fail-Safe-Position bezeichnet, sein. Bekannt ist hier beispielsweise eine elektronische Nockenwellenverstellung bei einem Kraftfahrzeugverbrennungsmotor, bei der bei einem Fehler der Elektromotor des Stellantriebs von einem Controller getrennt wird und der Elektromotor die Nockenwelle noch - nach Möglichkeit mit einer einzuhaltenden Zielverstellgeschwindigkeit - derart in die Fail-Safe-Position verstellt, dass der Verbrennungsmotor zumindest noch mit Notlaufeigenschaften betrieben werden kann.

Das Anfahren der Fail-Safe-Position bzw. das Verstellen in die Fail-Safe-Position kann beispielsweise durch eine Rückstellfeder am Stellantrieb bewirkt werden. Nachteilig daran ist, dass die Rückstellfeder zu einer Überdimensionierung des Verstellsystems führt. Weiter nachteilig ist daran, dass im Normalbetrieb der (Elektro-)Motor die Federkraft überwinden muss, was zu einer höheren Last im Normalbetrieb und/oder zu höheren Antriebskosten des Verstellsystems führt.

Das Anfahren der Fail-Safe-Position kann weiter beispielsweise durch einen zweiten parallel geschalteten (Elektro-)Motor bewirkt werden. Dies ist allerdings mit einen hohen technischen Mehraufwand und/oder erheblichen Mehrkosten verbunden.

Die Fail-Safe-Position kann weiterhin beispielsweise durch ein Kurzschließen des (Elektro)-Motors, welches ein Abbremsen des Motors bewirkt, bewirkt werden. Das Bremsprinzip basiert auf einer induzierten Gegenspannung des Motors und ist deswegen drehzahlabhängig. Bei kleineren Drehzahlen ist kein Bremsmoment mehr vorhanden, welches das Verstellsystem in der Fail-Safe-Position hält, falls diese überhaupt erreicht wird.

Es ist Aufgabe der vorliegenden Erfindung, einen Betrieb eines Elektromotors zu realisieren, bei dem ein Notlaufkonzept bzw. ein Erreichen einer Fail-Safe-Position einfach, sicher und kostengünstig zu erreichen ist.

Die Aufgabe wird durch das Verfahren nach Anspruch 1 gelöst.

Vorteilhafte Ausführungsformen und Weiterbildungen sind Gegenstand der Unteransprüche. Die Gegenstände der Unteransprüche beziehen sich auf das erfindungsgemäße Verfahren zum Betreiben des Elektromotors in dem Normallauf- und/oder in dem Notlaufbetrieb.

Anzumerken ist, dass als solche bezeichneten Einheiten und/oder Vorrichtungen sowohl als physikalische Einheiten und/oder Vorrichtungen als auch als rein funktional, virtuelle Einheiten und/oder Vorrichtungen bzw. sowohl in Hard- als auch in Software realisiert sein können.

Die Stromversorgungseinheit des Elektromotors, insbesondere eines Drehstrommotors, wie eines Drehstrom-Asynchronmotors oder eines Drehstrom-Synchronmotors, kann bevorzugt derart eingerichtet sein, dass ein Stator des Elektromotors im Normallaufbetrieb mit Drehstrom versorgbar ist.

Die Notlaufstromversorgungseinrichtung des Elektromotors kann weiterhin bevorzugt derart eingerichtet sein, dass der Stator, insbesondere zumindest zwei oder drei Phasen des Stators, im Notlaufbetrieb mit Gleichstrom versorgt wird, wobei der im Notlaufbetrieb mit Gleichstrom versorgte Stator dann im Notlaufbetrieb ein nicht drehendes und/oder stehendes Magnetfeld ausbilden kann.

Durch das vom Stator mittels anliegendem Gleichstrom erzeugte, nicht drehende und/oder stehende, Magnetfeld wird besonderes bevorzugt ein Bremsmoment im Elektromotor erzeugt, welches den Elektromotor, insbesondere einen Rotor des Elektromotors, Drehzahl unabhängig und/oder bis zu einem Stillstand abbremst.

Besonders bevorzugt wird beim Abbremsen des Elektromotors ein Kraftfahrzeug-Stellantrieb in eine Sicherheitsposition, insbesondere eine Notlaufposition oder eine Fail-Safe-Position, verfahren. Das Bremsmoment und dadurch die Verfahr- bzw. Verstellgeschwindigkeit ist damit direkt von dem in den Phasen fließenden Strom abhängig.

Weiter kann bevorzugt vorgesehen werden, dass durch das nicht drehende und/oder stehende Magnetfeld und/oder durch das dadurch erzeugte Bremsmoment der Kraftfahrzeug-Stellantrieb in der Sicherheitsposition gehalten wird. Das Halten der Sicherheitsposition über die Zeit ist zweckmäßig mit einer minimalen Stromaufnahme zu gewährleisten, um die Energieaufnahme zu minimieren, das Bremsmoment optimal einzustellen und den Elektromotor gegen Übertemperatur zu schützen.

Dazu kann besonders bevorzugt vorgesehen werden, dass die Stromaufnahme, d.h. der Gleichstrom und/oder damit das Bremsmoment, mit welchem der Elektromotor abbremsbar ist, und/oder eine Verfahrgeschwindigkeit beim Verfahren des Kraftfahrzeug-Stellantriebs in die Sicherheitsposition, einstellbar ist.

Dazu kann bzw. können mindestens ein oder mehrere Relais und/oder ein oder mehrere Begrenzungswiderstände vorgesehen sein. Auch kann bzw. können mindestens ein oder mehrere Transistoren, insbesondere steuerbare Transistoren, wie FETs oder Low-Side-FETs, vorgesehen sein. Beispielsweise können die Transistoren puls-weiten-moduliert (PWM) mit 20 kHz angesteuert werden.

Hier kann weiter zweckmäßig vorgesehen sein, dass der bzw. die steuerbaren Transistoren auch bei einer Leistungsendstufe, insbesondere bei dem Elektromotor und/oder dem Kraftfahrzeug-Stellantrieb, im Normallaufbetrieb eingesetzt wird bzw. werden.

Bevorzugt kann auch vorgesehen werden, dass die Stromversorgungseinheit eine Wechselstromquelle oder eine Gleichstromquelle, insbesondere eine Batterie, wie eine Kraftfahrzeugbatterie, insbesondere für eine Kraftfahrzeugbordversorgung, mit einer Leistungsendstufe, insbesondere einer offenen DC-AC-Endstufe, beispielsweise einem Wechselrichter, aufweist.

Bei einer besonders bevorzugten Weiterbildung ist der Elektromotor ein Drehstrommotor, wie ein Asynchronmotor oder ein Synchronmotor, insbesondere für einen Kraftfahrzeug-Stellantrieb, wie einem Parallelschaltgetriebe (PSG) oder einem Nockenwellenversteller.

Besonders bevorzugt kann weiterhin vorgesehen werden, dass auch die Notlaufstromversorgungseinheit eine Gleichstromquelle, insbesondere eine Batterie, wie eine Kraftfahrzeugbatterie, insbesondere für eine Kraftfahrzeugbordversorgung, aufweist. Insbesondere kann vorgesehen werden, dass Stromversorgungseinheit und Notiaufstromversorgüngseihheit dieselbe. Gleichstromquelle nutzen.

Weiter kann besonders bevorzugt die Vorrichtung eine Schalteinheit aufweisen, welche, insbesondere bei einem vorgebbaren Systemzustand eines den Elektromotor aufweisenden technischen Gesamtsystems, wie hier beispielsweise das Parallelschaltgetriebe (PSG) oder das Nockenwellenverstellsystem mit dem Kraftfahrzeug-Stellantrieb, ein Umschalten vom Normallaufbetrieb in den Notlaufbetrieb bewirkt, insbesondere durch ein Kurzschließen des Elektromotors, wobei insbesondere das Gesamtsystem in einen Sicherheitszustand gebracht wird.

Die Vorrichtung kann eine Zustandsüberwachungseinrichtung aufweisen, welche die Systemzustände überwacht und/oder einen vorgebbaren Systemzustand, insbesondere einen Fehlerzustand, erkennt.

Die Vorrichtung oder deren Weiterbildungen kann bzw. können insbesondere besonders bevorzugt eingesetzt werden zu einem Verfahren eines Kraftfahrzeug-Stellantriebs in eine Sicherheitsposition und/oder zu einem Halten eines Kraftfahrzeug-Stellantriebs in einer Sicherheitsposition (Notlaufkonzept).

Dabei wird im Notlaufbetrieb durch den Gleichstrom im Stator ein nichtdrehendes Magnetfeld erzeugt. Dadurch wird weiterhin ein, Drehzahl unabhängiges Bremsmoment im Elektromotor erzeugt, durch welches der Elektromotor bzw. der Rotor im Elektromotor bis zum Stillstand abgebremst wird.

Beim Abbremsen des Elektromotors wird der Kraftfahrzeug-Stellantrieb in die Sicherheitsposition, der Fail-Safe-Position, verfahren bzw. durch das Bremsmoment im Elektromotor wird der Kraftfahrzeug-Stellantrieb in der Sicherheitsposition gehalten. Anschaulich gesehen wird hier der Elektromotor eines Kraftfahrzeugs-Stellantriebs als Gleichstrombremse im Notlauf oder in Fail-Safe-Positionen genutzt.

Weiter kann hier auch vorgesehen werden, dass eine vorgebbare Situation eines durch den Kraftfahrzeug-Stellantrieb verstellbaren Gesamtsystems erkannt wird und der Elektromotor bei erkannter vorgebbarer Situation lurch Kurzschließen vom Normallaufbetrieb in den Notlaufbetrieb geschaltet wird.

Im Folgenden sollen Ausführungsbeispiele der Vorrichtung anhand der Figuren erläutert werden. Es zeigt:
- Fig. 1: ein erstes beispiethaftes Notlaufkonzept mit Relais für einen Kraftfahrzeug-Stellantrieb;
- Fig. 2: ein zweites beispielhaftes Notlaufkonzept mit FETs für einen Kraftfahrzeug-Stellantrieb;
- Fig. 3: ein Diagram mit Kurven, welche einen Zusammenhang zwischen einer Motordrehzahl und einem Motorstrom für verschiedene Notlaufkonzepte verdeutlichen;
- Fig. 4: ein Diagram mit Kurven, welche einen Zusammenhang zwischen einer Motordrehzahl und einem Bremsmoment für verschiedene Notlaufkonzepte verdeutlichen.

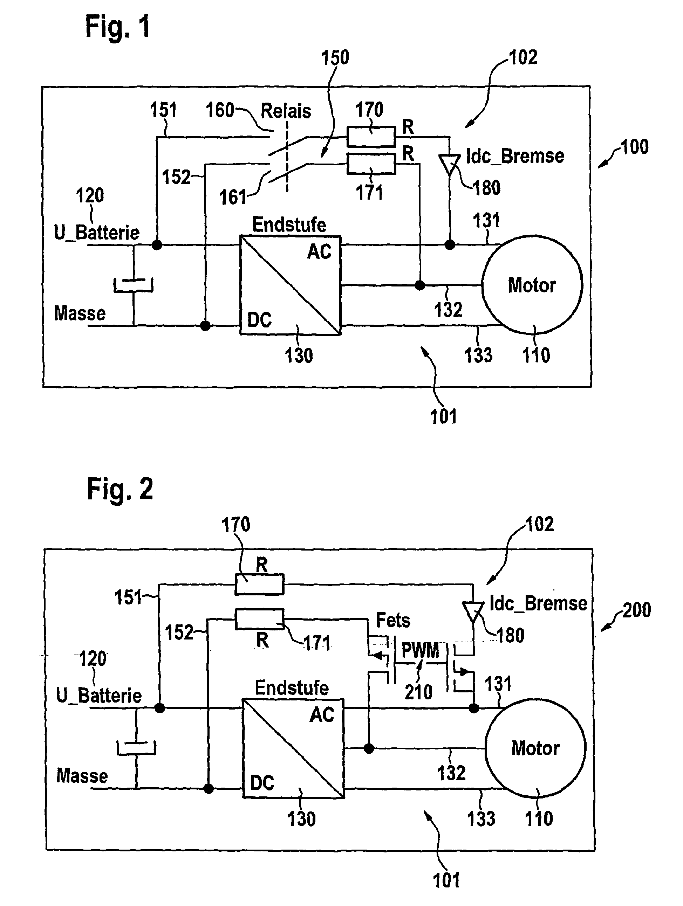

In Fig.1 ist ein erstes Ausführungsbeispiel, ein Bremsverfahren bzw. Notlaufkonzept mit Relais für Elektromotoren für Kraftfahrzeug-Stellantriebe im Normal- oder Notlaufbetrieb, verdeutlicht. Fig.1 zeigt eine Schaltung 100 für einen Elektromotor bei einem Kraftfahrzeug-Stellantrieb für einen Normallauf- und für einen Notlaufbetrieb, beispielsweise für eine elektronische Nockenwellenverstellung.

Bei dieser Schaltung 100 wird, wie Fig.1 zeigt, im Normallaufbetrieb 101 ein Drehstrommotor 110, in diesem Fall ein Asynchronmotor 110, mittels einer Batterie 120, beispielsweise einer Kraftfahrzeug-Bordbatterie 120, und einer (Leistungs-)Endstufe 130, in diesem Fall eine offene DC-AC-Stufe 130, mit Drehstrom gespeist. Fig.1 zeigt die entsprechende Verschaltung der Phasen 131, 132, 133 des Asynchronmotors 110 für den Normallaufbetrieb 101.

Diese Schaltung 100 sieht weiter einen Notlaufbetrieb 102 mit entsprechender Verschaltung vor, bei welchem bei einem aufgetretenen Fehler der Asynchronmotor 110 von einem Controller getrennt wird (nicht dargestellt) und der Kraftfahrzeug Stellantrieb in eine Fail-Safe-Position verfahren wird. Für den Notlaufbetrieb 102 bzw. die entsprechende Verschaltung sieht die Schaltung 100 eine Kurzschlussschaltung 150 vor, durch welche die Leistungsendstufe 130 bei dem aufgetretenen Fehler kurzgeschlossen wird.

Fig.1 zeigt hier die Kurzschlussschaltung 150 auf zwei Phasen 131, 132 des Asynchronmotors 110, wobei diese entsprechend auch auf drei Phasen des Asynchronmotors 110 geschaltet werden kann. Diese Kurzschlussschaltung 150 weist in diesem Fall zwei Leitungsstränge 151, 152 auf, welche jeweils ein zuschaltbares Relais 160, 161 sowie einen vorgebbaren Begrenzungswiderstand 170, 171 aufweisen.

Durch diese Kurzschlussschaltung 150 wird der Stator des Asynchronmotors 110 (im Notlaufbetrieb) durch die Bordspannung 120 mit Gleichstrom, welcher in Fig.1 durch ldc-Bremse bzw. Bremsstrom 180 verdeutlicht ist, versorgt, wobei er ein nicht drehendes Magnetfeld erzeugt. Dieses stehende Magnetfeld bremst den drehenden Rotor des Asynchronmotors 110 bis zum Stillstand ab und hält den Kraftfahrzeug-Stellantrieb in der Fail-Safe-Position. Das Bremsmoment und dadurch die Verstellgeschwindigkeit (auch Bremszeit) sind dabei von dem in den Phasen fließenden Strom abhängig.

Das Halten der Fail-Safe-Position über die Zeit kann hier wegen der durch die Relais 160, 161 sowie durch die Begrenzungswiderstände 170, 171 einstellbaren Stromaufnahme mit einer minimalen Stromaufnahme gewährleistet werden, um die Energieaufnahme zu minimieren, das Bremsmoment optimal einzustellen und den Asynchronmotor 110 gegen Übertemperaturen zu schützen.

In Fig.2 ist ein zweites Ausführungsbeispiel, ein Bremsverfahren bzw. Notlaufkonzept mit FETs für Elektromotoren für Kraftfahrzeug-Stellantriebe im Normal- oder Notlaufbetrieb, verdeutlicht. Fig.2 zeigt eine in ihrer Funktion der Schaltung 100 entsprechende Schaltung 200 für den Asynchronmotor 110 bei dem Kraftfahrzeug-Stellantrieb für den Normallauf- 101 und für den Notlaufbetrieb 102, bei welcher die Stromaufnahme über steuerbare Transistoren 210, in diesem Fall Low-Side-FETs 210, die aus der Leistungsendstufe, die im Normallaufbetrieb eingesetzt wird, stammen können, einstellbar ist.

Die Ansteuerung der FETs 210 erfolgt puls-weiten-moduliert (PWM) hier beispielsweise mit 20 kHz und wirkt wie ein Endstufenschalter für die Endstufe 130.Im Übrigen entspricht Schaltung 200 der Schaltung 100.

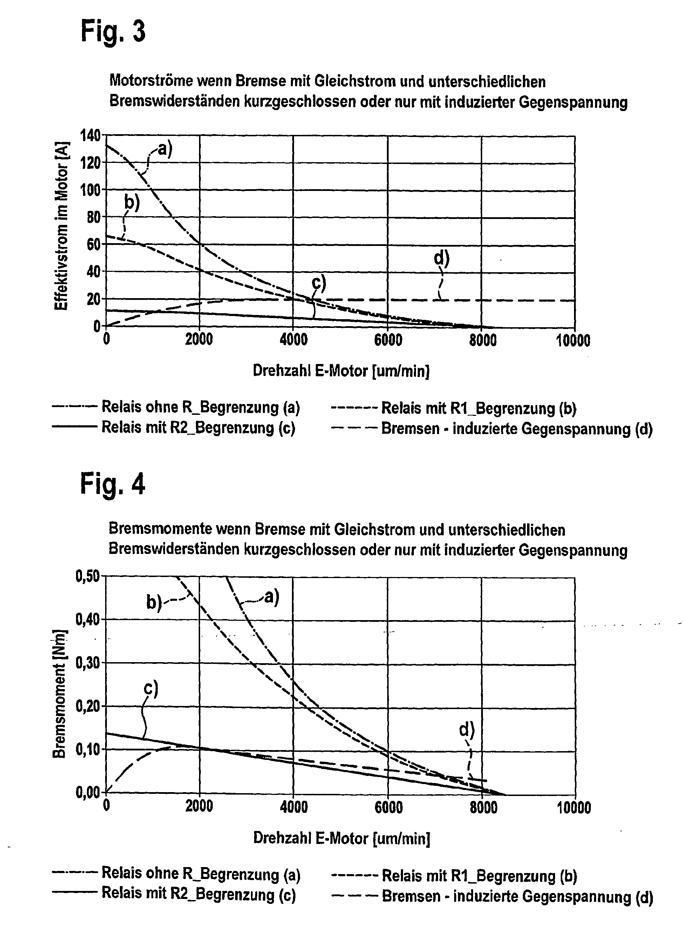

Fig.3 und Fig.4 zeigen Bremsströme (Fig.3) und Bremsmomente (Fig.4) bzw. entsprechende Verläufe bzw. Kurven jeweils in Abhängigkeit von der Motordrehzahl für das Notlaufkonzept mit Relais ohne Begrenzungswiderstand (Kurve a)), für das Notlaufkonzept mit Relais mit kleinem Begrenzungswiderstand (Kurve b)) und für das Notlaufkonzept mit Relais mit großem Begrenzungswiderstand (Kurve c)) (vgl. Schaltung Fig.1) sowie für das (drehzahlabhängige) Notlaufkonzept basierend auf einer induzierten Gegenspannung des Motors (Kurve d)).

### Bezugszeichenliste

- 100: Schaltung
- 101: Normallaufbetrieb bzw. Normallaufbetriebsschaltung
- 102: Notlaufbetrieb bzw. Notlaufbetriebsschaltung
- 110: Asynchronmotor
- 120: Batterie
- 130: Leistungsendstufe
- 131, 132, 133: Phasen des Asynchronmotors
- 150: Kurzschlussschaltung
- 151, 152: Leitungsstränge
- 160, 161: Relais
- 170,171: Begrenzungswiderstand, Bremswiderstand
- 180: Idc-Bremse bzw. Bremsstrom
- 200: Schaltung
- 210: Low-Side-FETs

## Patentansprüche

1. Verfahren zum Betreiben eines Elektromotors zum Verfahren eines Nockenwellenverstellsystems in eine Sicherheitsposition und zu einem Halten eines Nockenwellenverstellsystems in einer Sicherheitsposition, wobei eine vorgebbare Situation eines durch das Nockenwellenverstellsystems verstellbaren Gesamtsystems erkannt wird, wobei der Elektromotor bei erkannter vorgebbarer Situation durch Kurzschließen von einem Normallaufbetrieb (101) in einen Notlaufbetrieb (102) geschaltet wird, wobei in dem Notlaufbetrieb (102) ein Bremsmoment in dem Elektromotor erzeugt wird, welches den Elektromotor, insbesondere bis zum Stillstand abbremst, wobei beim Abbremsen der Kraftfahrzeug-Stellantrieb in die Sicherheitsposition verfahren wird, und/oder durch welches Bremsmoment der Kraftfahrzeug-Stellantrieb in der Sicherheitsposition gehalten wird.

2. Verfahren nach Anspruch 1, **dadurch gekennzeichnet, dass** die Systemzustände des Gesamtsystems überwacht werden und/oder ein vorgebbarer Systemzustand, insbesondere ein Fehlerzustand, erkannt wird.

3. Verfahren nach einem der voranstehenden Ansprüche, **dadurch gekennzeichnet, dass** der Gleichstrom und/oder das Bremsmoment, mit welchem der Elektromotor abgebremst wird, und/oder eine Verfahrgeschwindigkeit beim Verfahren des Kraftfahrzeug-Stellantriebs in die Sicherheitsposition eingestellt wird bzw. werden, insbesondere derart, dass eine Stromaufnahme und/oder eine Energieaufnahme des Elektromotors minimiert wird und/oder eine Überhitzung des Elektromotors verhindert wird.

## Claims

1. Method for operating an electric motor for moving a camshaft adjustment system to a safety position and for holding a camshaft adjustment system in a safety position, wherein a predefinable situation of an overall system which can be adjusted by the camshaft adjustment system is identified, wherein the electric motor is switched from a normal operating mode (101) to an emergency operating mode (102) by short-circuiting when a predefinable situation is identified, wherein a braking torque is generated in the electric motor in the emergency operating mode (102), the said braking torque braking the electric motor, in particular to a standstill, wherein the motor vehicle actuating drive is moved to the safety position during the braking process, and/or by means of which braking torque the motor vehicle actuating drive is kept in the safety position.

2. Method according to Claim 1, **characterized in that** the system states of the overall system are monitored and/or a predefinable system state, in particular a fault state, is identified.

3. Method according to either of the preceding claims, **characterized in that** the direct current and/or the braking torque, with which the electric motor is braked, and/or a movement speed is or are set when the motor vehicle actuating drive is moved to the safety position, in particular in such a way that power consumption and/or energy consumption of the electric motor are/is minimized and/or overheating of the electric motor is prevented.

## Revendications

1. Procédé pour faire fonctionner un moteur électrique pour amener un système de déphasage d'arbre à cames dans une position de sécurité et pour arrêter un système de déphasage d'arbre à cames dans une position de sécurité, une situation prédéfinie d'un système global déphasable par le système de déphasage d'arbre à cames étant détectée, le moteur électrique étant connecté par court-circuitage en cas de détection d'une situation prédéfinie, d'un mode de fonctionnement normal (101) à un mode de fonctionnement d'urgence (102), un couple de freinage étant produit dans le moteur électrique dans le mode de fonctionnement d'urgence (102), ledit couple freinant notamment le moteur électrique jusqu'à l'arrêt, le servomoteur du véhicule automobile étant amené dans la position de sécurité lors de la décélération et/ou le servomoteur du véhicule automobile étant maintenu dans la position de sécurité par ledit couple de freinage.

2. Procédé selon la revendication 1, **caractérisé en ce que** les états du système global sont surveillés et/ou qu'un état prédéfini du système est détecté, notamment un état défaillant.

3. Procédé selon l'une quelconque des revendications précédentes, **caractérisé en ce que** le courant continu et/ou le couple de freinage avec lequel le moteur électrique est freiné et/ou la vitesse de conduite est et/ou sont réglé(s) dans la position de sécurité lors du déplacement du servomoteur du véhicule automobile, notamment de façon à minimiser le courant absorbé et/ou l'énergie absorbée du moteur électrique et/ou à empêcher une surchauffe du moteur électrique.
